# EUROPÄISCHE PATENTSCHRIFT

(11) **EP 1 255 698 B1**
(45) Veröffentlichungstag und Bekanntmachung des Hinweises auf die Patenterteilung: **14.03.2007**
(21) Anmeldenummer: 01915172.9
(22) Anmeldetag: 27.01.2001
(51) Int. Cl.: C02F 3/12, C02F 3/06, B01D 33/21, B01D 61/14, B01D 63/08, B01D 63/16, B01D 65/08, C02F 1/44

(54) **WASSERAUFBEREITUNGSANLAGE**
WATER TREATMENT UNIT
INSTALLATION DE TRAITEMENT DES EAUX

(30) Priorität: 31.01.2000 DE 10004096
(43) Veröffentlichungstag der Anmeldung: 13.11.2002
(60) Teilanmeldung: 06010018.7
(73) Patentinhaber: Fraunhofer-Gesellschaft zur Förderung der angewandten Forschung e.V., 80686 München (DE)
(72) Erfinder: SCHLIESSMANN, Ursula, 73277 Owen (DE); TRÖSCH, Walter, 70529 Stuttgart (DE); STERNAD, Werner, 70197 Stuttgart (DE); STROH, Norbert, 71106 Magstadt (DE)
(86) Internationale Anmeldenummer: PCT/EP2001/000903
(87) Internationale Veröffentlichungsnummer: WO 2001/056937

(56) Entgegenhaltungen:
- DE-A- 19 648 519
- FR-A- 2 799 391
- US-A- 4 079 008
- PATENT ABSTRACTS OF JAPAN vol. 012, no. 172 (C-497), 21. Mai 1988 (1988-05-21) -& JP 62 279807 A (HITACHI PLANT ENG & CONSTR CO LTD), 4. Dezember 1987 (1987-12-04)
- PATENT ABSTRACTS OF JAPAN vol. 011, no. 136 (C-419), 30. April 1987 (1987-04-30) -& JP 61 274799 A (AGENCY OF IND SCIENCE & TECHNOL;OTHERS: 01), 4. Dezember 1986 (1986-12-04)
- PATENT ABSTRACTS OF JAPAN vol. 017, no. 400 (C-1089), 27. Juli 1993 (1993-07-27) & JP 05 076899 A (HITACHI KIDEN KOGYO LTD), 30. März 1993 (1993-03-30)
- PATENT ABSTRACTS OF JAPAN vol. 012, no. 159 (C-495), 14. Mai 1988 (1988-05-14) -& JP 62 273100 A (KUBOTA LTD), 27. November 1987 (1987-11-27)
- PATENT ABSTRACTS OF JAPAN vol. 1998, no. 10, 31. August 1998 (1998-08-31) -& JP 10 128393 A (MITSUBISHI RAYON CO LTD;MITSUBISHI RAYON ENG CO LTD; DIA FUROTSUKU KK;), 19. Mai 1998 (1998-05-19)

## Beschreibung

Die vorliegende Erfindung betrifft eine Vorrichtung zur Aufbereitung von Wasser, insbesondere Abwasser und Trinkwasser sowie ein Verfahren zur Durchführung einer Aufbereitung von Wasser unter Verwendung dieser Vorrichtung.

Bei der Wasseraufbereitung erfolgt die Behandlung von Wasser mit dem Ziel, seine Beschaffenheit dem jeweiligen Verwendungszweck wie auch bestimmten Anforderungen anzupassen. Verfahren zur Aufbereitung von Trinkwasser umfassen beispielsweise Flockungs-, Filtrations-, Belüftungs-, Enteisenungs-, Entmanganungs-, Entsäuerungs-, Desinfektions-, Phosphatierungs-, Denitrifikations- und Fluoridierungsverfahren. Bei Abwasser handelt es sich durch häuslichen, gewerblichen, industriellen, landwirtschaftlichen oder sonstigen Gebrauch in seiner natürlichen Zusammensetzung verändertes Wasser (Schmutzwasser) sowie das von bebauten Flächen abfließende weniger verschmutzte Regen- und Schmelzwasser, wobei Art und Konzentration der Schmutzstoffe stark von der Herkunft des Abwassers abhängig sind. Bei der Abwasserreinigung werden physikalische, chemische und/oder biologische Verfahren verwendet, die häufig gemeinsam eingesetzt werden müssen, um einen hohen Wirkungsgrad der Reinigung zu erzielen. Bei chemischen Verfahren werden Schadstoffe in eine leichter entfernbare Form oder in schadlose Reaktionsprodukte umgewandelt. So werden beispielsweise Reaktionen eingesetzt, die eine Oxidation, Reduktion oder die Bildung schwer löslicher Verbindungen bewirken.

Bei biologischen Verfahren werden die organischen Stoffe durch Mikroorganismen und Kleinlebewesen unter Neubildung von Biomasse zu unschädlichen Verbindungen metabolisiert. Grundsätzlich werden die aerobe und die anaerobe Abwasserbehandlung unterschieden. Die aerobe Abwasserbehandlung erfolgt mit dem Ziel, sauerstoffzehrende Inhaltsstoffe weitestgehend zu reduzieren, wobei organische Substanzen durch die am Abbau beteiligten Organismen unter Bildung von Kohlendioxid, Wasser, Nitraten und Sulfaten reduziert werden. Grundvoraussetzung für aerob arbeitende Systeme ist eine ausreichende Belüftung mit Luft (oder Sauerstoff angereicherter Luft oder reinem Sauerstoff). Zunehmende Bedeutung gewinnt auch die anaerobe Abwasserbehandlung, das heißt der biologische Abbau organischer Stoffe unter Ausschluss von Sauerstoff, wobei sowohl obligat anaerobe Mikroorganismen, für die Sauerstoff toxisch ist, als auch fakultativ anaerobe Mikroorganismen eingesetzt werden können. Bei dem anaeroben Abbau handelt es sich um Gärungsprozesse (zum Beispiel Alkohol-, Essigsäure-, Milchsäure-, Aceton-Butanol-Gärung usw.).

Bei den physikalischen Verfahren zur Abwasserreinigung werden die Abwasserinhaltsstoffe entsprechend ihren physikalischen Eigenschaften, wie Teilchengröße, Dichte und Sinkgeschwindigkeit nach unterschiedlichen Verfahren aufkonzentriert. Hierzu zählen alle Verfahren, die als Trennmittel feste Hilfsstoffe (zum Beispiel Adsorption, Filtration, Ionenaustausch), flüssige Hilfsstoffe (Extraktion), gasförmige Hilfsstoffe (Flotation, Strippen), Wärmeenergie (Destillation, Eindampfen) oder Schwerkraft (Absetzen, Aufschwimmen) verwenden. Insbesondere finden auch Verfahren der Membrantrenntechnik, das heißt mit Hilfe von Membranen durchgeführte Trennprozesse, Anwendung.

Verfahren und Vorrichtungen der Membrantrenntechnik werden außer bei der Wasseraufbereitung in vielen wissenschaftlichen und industriellen Anwendungsbereichen eingesetzt. Trennschritte in der Membrantrenntechnik lassen sich nach den Trenngrenzen in die Klassen Mikro-, Ultra- und Nanofiltration sowie Umkehrosmose einteilen. Mittels dieser Verfahren können Partikelgrößen bis zu 5 nm abgetrennt werden. Die Feststoffe werden von der Membran zurückgehalten und konzentrieren sich zumindest direkt an der Membran auf, während die abfiltrierte Flüssigkeit die Membran passiert. Durch eine sogenannte Konzentrationspolarisation wird ein Deckschichtaufbau, der auch als Membranfouling bekannt ist, verursacht, der durch unterschiedliche Betriebsweisen strukturell beeinflusst werden kann. Als klassische Betriebsweisen haben sich die Dead-end- und die Cross-flow-Filtration durchgesetzt. Diese unterscheiden sich im wesentlichen dadurch, dass bei der Dead-end-Filtration keine erzwungene Anströmung der Membran erzeugt wird und deshalb die Deckschicht unkontrolliert anwachsen kann, während bei der Cross-flow-Filtration die Membran gezielt parallel zur Oberfläche überströmt wird, wodurch eine Kontrolle des Deckschichtaufbaus erreicht wird. Dennoch tritt nach längerer Betriebszeit eine Reduzierung des Filtratstroms auf, die durch eine reversible Deckschichtbildung verursacht wird. Sowohl bei der Dead-end- als auch bei der Cross-flow-Filtration hat sich deshalb ein periodisches Rückspülen bewährt, um wenigstens kurzzeitig hohe und fast konstante Filtratflüsse zu erzielen. Der typische spezifische Energiebedarf für eine Cross-flow-Ultrafiltration liegt zum Beispiel bei 3 bis 7 kWh/m³ bei Filtratflüssen von etwa 100 bis 150 l/m²h und einem Transmembrandruck von 3 bis 5 bar. Für eine Dead-end-Filtration ergeben sich vergleichbare Werte von etwa 0,1 bis 0,5 kWh/m³ bei Filtratflüssen von etwa 50 bis 80 l/m²h für einen Transmembrandruck von etwa 0,5 bis 2 bar. Dies führt bei hohen Volumenströmen und geringer Wertschöpfung, wie dies bei der kommunalen und/oder industriellen Abwasserreinigung oder in der Trinkwassergewinnung aus Oberflächengewässern der Fall ist, zu einer ungünstigen Kostensituation. Für die Dead-end-Filtration ergeben sich noch höhere Investitions-, dafür aber niedrigere Betriebskosten. Dennoch konnte sich diese Art der Filtration in diesem Anwendungsbereich nicht durchsetzen, weil deren Neigung zur Deckschichtbildung zu betrieblichen Problemen führen kann. Die Cross-flow-Filtration ist technisch eher für den genannten Anwendungsbereich geeignet, verursacht aber zu hohe Betriebskosten. In jüngster Zeit werden daher vermehrt sogenannte Tauchsysteme eingesetzt. Diese Systeme vermeiden das ständige Umpumpen der Flüssigphase und verursachen dadurch niedrigere Betriebskosten als Cross-flow-Systeme. Dabei kommen unterschiedliche Membranformen wie Hohlfasern, Rohre oder Scheiben zum Einsatz, bei denen das transmembrane Druckgefälle durch Erzeugen eines Unterdrucks in Höhe von etwa 0,5 bis 0,9 bar auf der Filtratseite erreicht wird. Diese Tauchsysteme werden zum Beispiel in Belebungsbecken der Kläranlagen eingesetzt, so dass eine gewisse Reduzierung der Deckschichtbildung durch die Bewegung der Flüssigphase aufgrund der dort erfolgenden Begasung möglich ist. Dennoch ist eine deutliche Reduzierung des Filtratflusses mit der Zeit durch unkontrollierte Deckschichtbildung ein wesentliches Hindernis für einen wirtschaftlichen Einsatz solcher Tauchsysteme in Kläranlagen.

In der DE 196 241 76 C2 ist ein Filtrationsmodul beschrieben, der aus Kassetten besteht, welche scheibenförmige Flachmembranen beinhalten, bei denen das Feed allseitig von außen durch die Membranen strömen kann. Das Permeat wird in der Mitte durch ein zentrales Sammelrohr abgeführt. Wenn dieser Filter als Cross-flow-Filter betrieben wird, verursacht er die oben beschriebenen Probleme, das heißt die Energiekosten sind sehr hoch. Insbesondere bei hohen Überströmgeschwindigkeiten und frontseitiger Zufuhr der Feedlösung kann es zu mechanischen Beschädigungen der einzelnen Membranscheiben kommen.

In der JP 05 076899-A wird eine Filtervorrichtung beschrieben, die mehrere Membranscheiben aufweist, die mit einem hohlen, drehbaren Tragkörper drehfest verbunden sind: die aus dem Bodenbereich eines Reaktors austretende Flüssigkeit wird mit einer Pumpe in die Filtervorrichtung gedrückt und das Konzentrat wird in den oberen Bereich des Reaktors zurückgeleitet.

In der DE 196 48 519 wird die Nutzung der hydrostatischen Energie der Wassersäule eines Reaktors zur Membranfiltration in einem vom Reaktor getrennten Membranmodul beschrieben.

Das der vorliegenden Erfindung zugrunde liegende technische Problem besteht also darin, ein wirtschaftliches Verfahren und eine kostengünstige Vorrichtung zur Wasseraufbereitung, insbesondere zur Filtration hoher Volumenströme bei geringer Wertschöpfung bereitzustellen, insbesondere zur Reini-gung kommunaler und industrieller Abwässer oder aus Oberflächengewässern gewonnenen Trinkwassers.

Die vorliegende Erfindung löst das ihr zugrunde liegende technische Problem durch die Bereitstellung einer Vorrichtung zur Aufbereitung von Wasser, insbesondere Abwasser oder Brauchwasser, umfassend einen Reaktor und eine mit dem Reaktor in Fluidverbindung stehende Filtervorrichtung, wobei die Filtervorrichtung unterhalb des Reaktorbodens angeordnet ist und mindestens ein mit einem hohlen drehbaren Tragkörper drehfest verbundenes Filterelement aufweist, dessen Inneres mit dem Innenraum des Tragkörpers so in Fluidverbindung miteinander steht, dass das Filtrat aus dem Inneren des mindestens einen Filterelementes in das Innere des Tragkörpers gelangen und von dort abgezogen werden kann. Die erfindungsgemäß vorgesehene Anordnung der Filtervorrichtung unterhalb des Reaktorbodens, außerhalb des Reaktors, ermöglicht das energetisch vorteilhafte Ausnutzen der in vielen technischen Anlagen vorhandenen hydrostatischen und/oder hydrodynamischen Drücke zur Erzeugung eines transmembranen Druckgefälles über das Filterelement. Die erfindungsgemäße Kombination aus Filtervorrichtung und Reaktor, wobei die Filtervorrichtung in bevorzugter Ausführungsform als Modul mit gestapelten Filterscheiben, die sowohl aus anorganischem als auch aus organischem Material hergestellt sein können, ausgeführt ist, ermöglicht erstmals den wirtschaftlichen Einsatz der Membrantrenntechnik für die Filtration hoher Volumenströme bei geringer Wertschöpfung, zum Beispiel bei der Reinigung von Flüssigkeiten beziehungsweise Suspensionen, insbesondere kommunalen oder industriellen Abwässern oder bei der Trinkwassergewinnung aus Oberflächengewässern. Es ist vorgesehen, die Filtervorrichtung, also das auf dem Tragkörper angeordnete Filterelement, in einem, vorzugsweise zylindrischen Gehäuse, anzuordnen und unterhalb des Reaktors zu positionieren. In einer solchen Ausführungsform sind Filtervorrichtung und Reaktor über Zu- und Ablaufverbindungen, zum Beispiel Rohre oder Schläuche, miteinander zu verbinden. Das Gehäuse füllt sich mit der zu filtrierenden Suspension, wobei der Tragkörper in Rotation um seine Längsachse, zum Beispiel mittels eines Motors, versetzt wird. Durch die mindestens eine auf dem Tragkörper drehfest angeordnete Filterscheibe wird Filtrat eingezogen und durch die in Strömungszusammenhang mit der Filterscheibe stehende Hohlwelle aus der erfindungsgemäßen Vorrichtung abgezogen. Durch die bei der Rotation auftretende Flüssigkeitsbewegung um die und zwischen den Filterscheiben und die auf diese wirkende Zentrifugalkraft kann eine Deckschichtbildung wirkungsvoll unterbunden werden. Der für die Filtration notwendige transmembrane Druck kann beispielsweise durch Anlegen eines Unterdrucks auf der Filtratseite der

Vorrichtung erfolgen. Erfindungsgemäß wird, wie erwähnt, der in vielen für die vorliegende Vorrichtung in Betracht kommenden Anlagen vorhandene hydrostatische und hydrodynamische Druck als transmembranes Druckgefälle ausgenutzt. Moderne Abwasserreinigungsanlagen weisen beispielsweise Belebungsreaktoren von bis zu 20 m Höhe auf, wodurch ein transmembranes Druckgefälle aufgrund des hydrostatischen Druckes von fast 2 bar möglich ist. Zudem erfolgt in aerob arbeitenden Reaktoren häufig eine Dispergierung der zur Belüftung eingetragenen Gasphase mittels Flüssigkeitsstrahlen, beispielsweise mit Geschwindigkeiten von bis zu 20 m/s. So entstehen zusätzlich nutzbare hydrodynamische Drücke von beispielsweise bis zu 2 bar, da die erfindungsgemäß eingesetzte Filtervorrichtung in den Flüssigkeitskreislauf einer Düse, zum Beispiel einer Zweistoffdüse, zum Einbringen von Flüssigkeit und/oder Gas beziehungsweise eines Gasgemisches wie Luft eingebaut ist. Die Erfindung ermöglicht die energetisch vorteilhafte Entkopplung von für die Filtration notwendiger Überströmgeschwindigkeit und sonstiger Flüssigkeitsbewegung, da die für die effiziente Filtration notwendige Überströmgeschwindigkeit durch die Rotation des Filterelementes erzeugt wird. Das notwendige Druckgefälle wird gleichsam automatisch und daher kostengünstig durch den, insbesondere bei großer Bauhöhe und Füllhöhe des Reaktors, vorhandenen hydrostatischen Druck erzeugt.

Im Unterschied zu den aus der Literatur bekannten Filtrationsvorrichtungen für Abwasserreaktoren weist die erfindungsgemäße Vorrichtung also mehrere Vorteile auf. Gegenüber Cross-flow-Systemen ergeben sich erheblich geringere spezifische Energiekosten und es besteht keine Verstopfungsgefahr für die Filterelemente. Gegenüber Plattenmodulen oder Zee-Weed-Modulen, welche in einen Abwasserreaktor eingebaut werden, besteht der Vorteil, dass die Sauerstoffversorgung aerober Mikroorganismen von der Filtration bei der erfindungsgemäßen Vorrichtung entkoppelt ist, da die Luftzufuhr und der Flüssigkeitskreislauf für die Gasdispergierung weitestgehend unabhängig von der gewünschten Filtrationsleistung eingestellt werden können. Die Kontrolle des Deckschichtaufbaus wird vielmehr durch die Rotation der Scheibenfilter erreicht und kann somit unabhängig von der Versorgung der aeroben Mikroorganismen eingestellt werden. Durch eventuell vorgesehene Einbauten, wie zum Beispiel Strombrecher im Filtrations-Modul, kann der Deckschichtaufbau weiterhin beeinflusst werden. Der Transmembrandruck wird durch den in den Abwasserreaktoren notwendigerweise vorhandene hydrostatischen Druck erzeugt und zusätzlich durch den hydrodynamischen Druck, der zur Gasdispergierung mit Hilfe eines Flüssigkeitsstrahls notwendig ist. Hierbei wird im Unterschied zur Cross-flow-Filtration kein nennenswerter zusätzlicher Druckabfall im Membranmodul des Rotations-Scheibenfilters benötigt, da das Durchströmen des Moduls nicht zur Erzeugung hoher Überströmgeschwindigkeiten benötigt wird, sondern lediglich der hydrodynamische Druck ausgenützt wird und deshalb der freie durchströmte Querschnitt genügend groß gewählt werden kann, so dass praktisch kein zusätzlicher Druckabfall und damit Energiebedarf entsteht. Hierdurch ergeben sich wesentlich niedrigere spezifische Energiekosten als bei der Cross-flow-Filtration.

Erfindungsgemäß besteht eine Fluidverbindung zwischen dem Innenraum des Tragkörpers und dem Inneren des Filterelementes, also eine Einrichtung, die einen Flüssigkeitsstrom von einem Raum oder Bereich in einen anderen Raum oder Bereich ermöglicht. So kann das Innere des Filterelementes über eine oder mehrere Öffnungen, Röhren, Kanäle, Leitungen, Bohrungen, Schlitze, poröse Bereiche oder ähnliches mit dem Innenraum des Tragkörpers so in Verbindung stehen, dass ein Flüssigkeitsstrom vom Inneren des Filterelement in den Tragkörperinnenraum erfolgen kann und damit eine Fluidverbindung geschaffen wird.

In einer bevorzugten Ausführungsform der vorliegenden Erfindung ist der hohle Tragkörper eine Hohlwelle, zum Beispiel eine rohrförmige Hohlwelle. In einer weiteren bevorzugten Ausführungsform kann vorgesehen sein, das Filterelement als Filterscheibe auszuführen. Die Filterscheibe kann beispielsweise als eine Membran aufweisender oder membranüberzogener Hohlkörper beziehungsweise Hohlrahmen ausgeführt sein. Eingesetzt werden können erfindungsgemäß zum Beispiel üblicherweise in der Membrantrenntechnik verwendete technische Membranen, zum Beispiel Polymermembranen, Membranfilter, Ultrafiltrationsmembranen oder Mikrofiltrationsmembranen.

Die Erfindung betrifft in einer weiteren Ausgestaltung also auch eine vorgenannte Wasseraufbereitungsvorrichtung mit Reaktor und Filtervorrichtung, wobei der hohle Tragkörper in einem Gehäuse befindlich ist, vorzugsweise drehbar in einem Gehäuse, insbesondere einem zylindrischen Gehäuse, gelagert ist. Ein derartiges Gehäuse kann beispielsweise einen Zulauf vom Reaktor und einen Ablauf aufweisen, wobei durch den Zulauf zu filtrierende Flüssigkeit in das Gehäuse eingebracht und durch einen Ablauf die abgetrennten Feststoffe entnommen werden können. Der Zufluss der zu filtrierenden Suspension erfolgt vorteilhafterweise tangential. Hierdurch wird die Rotation der Flüssigkeit unterstützt und eine mechanische Belastung der Filterscheiben durch das Auftreffen der zu filtrierenden Suspension minimiert. Die auch als Konzentrat bezeichneten Feststoffe können über eine tangentiale Ableitung an der Zylinderwand oder an der unteren Stirnwand abgezogen werden. Das Filtrat verlässt das Gehäuse durch den hohlen Tragkörper.

Die Erfindung sieht in einer weiteren bevorzugten Ausführungsform vor, dass in dem Gehäuse der Filtervorrichtung Einbauten zur Beeinflussung der Strömung vorgesehen sein können, zum Beispiel Strombrecher.

In bevorzugter Ausführungsform weisen die Filterelemente Durchgangsöffnungen zur Aufnahme des Tragkörpers auf. Die Filterelemente sind in bevorzugter Ausführung beabstandet zueinander auf dem Tragkörper angeordnet, wobei in einer weiteren bevorzugten Ausführung die Längsachse des Tragkörpers senkrecht auf den Ober- und Unterseiten, also Grundflächen, der als Filterscheibe ausgebildeten Filterelemente steht.

Die Erfindung sieht also vor, dass die mindestens eine Filterscheibe drehfest so auf einer drehbaren Hohlwelle angebracht ist, dass das Filtrat durch diese abgezogen werden kann. Insbesondere kann die Hohlwelle einstückig ausgebildet sein und die mindestens eine Filterscheibe durch eine, in bevorzugter Ausführungsform zentral in letzterer angeordnete Durchgangsöffnung durchsetzen, wobei zumindest eine Öffnung in dem Bereich der Hohlwelle vorgesehen ist, den die Filterscheibe mit ihrer inneren Mantelfläche umschließt, so dass Flüssigkeit von der Filterscheibe in das Innere der Hohlwelle gelangen kann.

In einer weiteren Ausgestaltung kann vorgesehen sein, dass der Tragkörper, insbesondere die Hohlwelle mehrstückig aus verschiedenen, zum Beispiel rohrförmigen, hohlen Abschnitten ausgebildet ist, wobei die verschiedenen Abschnitte des Tragkörpers durch zwischen diesen angeordnete Filterelemente, insbesondere Filterscheiben, getrennt und gleichsam zur zu filtrierenden Zugebungsflüssigkeit hin flüssigkeitsdicht durch diese verbunden sind. Auch in dieser Ausgestaltung ist eine Fluidverbindung z.B. eine Öffnung zwischen dem Inneren des Tragkörpers und des Filterelementes vorgesehen. Das in das Innere der Filterscheiben eindringende Filtrat kann so vom Inneren der Filterscheibe in das Innere der Hohlwelle gelangen und aus dieser abgezogen werden.

Die Erfindung sieht weiterhin vor, dass die erfindungsgemäß eingesetzte Filtervorrichtung in Modulbauweise ausgeführt ist.

Die erfindungsgemäß eingesetzte Filtervorrichtung kann sowohl in aerob als auch in anaerob arbeitenden Systemen, zum Beispiel Abwasserbehandlungs- oder Wasseraufbereitungssystemen verwendet werden. Die Filtervorrichtung kann beispielsweise in der Belebungsstufe einer Kläranlage eingebaut werden und stellt ein modernes System zur Biomasserückhaltung und damit zur Aufkonzentrierung der Biomasse dar. Erfindungsgemäß kann die Filtervorrichtung selbstverständlich auch in der Auftrennung des Zulaufes zu Kläranlagen nach oder anstatt der Vorklärung eingesetzt werden. Dadurch wird der Zulauf in ein kohlenstoffreiches Konzentrat, das anaerob zu Biogas umgesetzt werden kann und ein kohlenstoffarmes Filtrat aufgetrennt, das zum Beispiel in Hochleistungsabwasserreaktoren aerob umgesetzt werden kann. Selbstverständlich ist es auch möglich, die erfindungsgemäße Vorrichtung zur Trinkwassergewinnung aus Oberflächengewässern einzusetzen. Die erfindungsgemäße Vorrichtung kann also als Vorrichtung ausgeführt sein, die Einrichtungen zum Luft- oder Gaseintrag aufweist und aerobe Betriebsführungen erlaubt. Die erfindungsgemäße Vorrichtung kann auch als luft- beziehungsweise gasdicht abgeschlossene Vorrichtung beziehungsweise als mit einem luft- oder gasdichten Reaktor ausgerüstete Vorrichtung ausgeführt sein oder aber eine durch sonstige Maßnahmen eine anaerobe Betriebsweise erlaubende Vorrichtung sein. Eine derartige letztgenannte Vorrichtung erlaubt eine betriebskostenarme Filtration im Verlauf von Bioprozessen, die keinen Luftsauerstoff wie die Denitrifikation oder gar keinen Sauerstoff wie die Milchsäure-, Ethanol- oder Aceton-Butanol-Vergärung benötigen.

Die Erfindung löst das ihr zugrunde liegende Problem auch durch die Bereitstellung eines Verfahrens zur Wasser-, insbesondere Abwasser- und Trinkwasseraufbereitung, im Rahmen dessen eine Abtrennung eines Filtrates von Feststoffen aus dem zu reinigenden Wasser erfolgt und wobei eine der erfindungsgemäßen Vorrichtungen eingesetzt wird. Insbesondere betrifft die Erfindung demgemäss ein Verfahren zur Gewinnung von Trinkwasser oder zur Reinigung von Abwasser, gemäß dem eine erfindungsgemäß einzusetzende Filtervorrichtung, also ein drehfest mit mindestens einem Filterelement versehener hohler und drehbar, zum Beispiel in einem Gehäuse, gelagerter Tragkörper, im Wesentlichen nur unter Einfluss hydrostatischen und hydrodynamischen Drucks, dem zu reinigenden Wasser ausgesetzt und in eine Drehbewegung zur Erzeugung einer Überströmungsgeschwindigkeit versetzt wird und durch das mindestens eine Filterelement in das Innere des hohlen Tragkörpers einströmendes Filtrat durch den hohlen Tragkörper abgezogen und dabei vom Konzentrat getrennt wird. Zusätzlich zu dem vorstehend beschriebenen hydrostatischen und hydrodynamischen Druck kann auch ein Anlegen eines Unterdrucks auf der Filtratseite oder eines Überdruckes auf der Zuflussseite vorgesehen sein.

Gemäß dem Verfahren der vorliegenden Erfindung erzeugt die in dem Reaktor befindliche zu reinigende Flüssigkeit oder Suspension einen hydrostatischen Druck, der auf eine erfindungsgemäß eingesetzte Filtervorrichtung im unteren Bereich des Reaktors, zum Beispiel im Bereich des Reaktorbodens oder, wenn außerhalb, insbesondere unterhalb des Reaktors, angeordnet und dann über Verbindungseinrichtungen mit dem Reaktor verbunden, dergestalt wirkt, dass ein transmembranes Druckgefälle über das Filterelement erzeugt wird, welches in energetisch günstiger Weise die Filtrierung der zu filtrierenden Flüssigkeit oder Suspension ermöglicht. Erfindungsgemäß ist vorgesehen, dass die in einem Gehäuse angeordnete Filtervorrichtung unterhalb des Bodens eines aerob arbeitenden Reaktors angeordnet ist und eine Düse, insbesondere ein Zweistoffdüse, im Reaktorboden angeordnet ist und die Luft und aus der Filtervorrichtung zugeführtes Konzentrat in den Reaktor einspritzt und dabei einen zusätzlich zu dem hydrostatischen Druck wirkenden Druck auf die Filtervorrichtung erzeugt, nämlich einen hydrodynamischen Druck.

Die Erfindung betrifft in einer weiteren Ausgestaltung ein vorgenanntes Verfahren, wobei das aufzubereitende Wasser Zulaufwasser zu einer Kläranlage ist, welches einer vorgenannten Vorrichtung zur Aufbereitung von Wasser zugeführt wird, in der der Reaktor als das Zulaufwasser enthaltendes Zulaufbecken ausgeführt ist und das gemäß des vorstehenden Verfahrens austretende Filtrat nach Abtrennung vom Konzentrat einem dem Zulaufbecken nachgeschalteten Belebungsreaktor zugeführt wird, der in bevorzugter Ausführungsform Teil einer weiteren Vorrichtung nach der vorliegenden Erfindung darstellen kann. Demgemäss sind in einem solchen Verfahrensgang zur Aufbereitung von Abwasser zwei erfindungsgemäße Vorrichtungen in Reihe geschaltet enthalten, die jeweils einen Reaktor und eine Filtervorrichtung aufweisen.

In einer besonders bevorzugten Ausführungsform kann vorgesehen sein, eine Pumpe vor oder hinter, das heißt druck- oder saugseitig der Filtervorrichtung anzuordnen, die eine Zirkulation der filtrierten beziehungsweise der zu filtrierenden Flüssigkeit oder Suspension vom Reaktor in die Filtervorrichtung und, teilweise, zurück gewährleistet.

In einer bevorzugten Ausführungsform der vorliegenden Erfindung ist vorgesehen, die zu filtrierende Flüssigkeit/Suspension aus dem Reaktor über eine Pumpe in die Filtervorrichtung zu leiten. Das Filtrat wird über die Hohlwelle abgezogen und das Konzentrat gegebenenfalls zusammen mit Luft durch eine Düse, insbesondere eine Zweistoffdüse, wieder in den Reaktor eingeführt, wobei zum Beispiel in einem Abwasserreaktor erwünschte hohe Zelldichten von Mikroorganismen erreicht werden können.

In einer weiteren bevorzugten Ausführungsform kann vorgesehen sein, die zu filtrierende Flüssigkeit/Suspension aus dem Reaktor in die vorzugsweise in einem Gehäuse angeordnete Filtervorrichtung zu leiten, wobei das Filtrat aus der Hohlwelle abgezogen wird und das Konzentrat über eine Pumpe zu einer vorzugsweise im Reaktorboden angeordnete Düse, insbesondere eine Zweistoffdüse, geleitet wird, die das Konzentrat zusammen mit Luft in den Reaktor einführt.

In einer weiteren bevorzugten Ausführungsform kann vorgesehen sein, das Konzentrat nicht wieder in den Reaktor zurückzuführen. In einer solchen Ausführungsform kann die zu filtrierende Suspension aus dem Reaktor über eine Pumpe zu der Filtervorrichtung, die vorzugsweise in einem Gehäuse angeordnet ist, zugeführt werden. Das Konzentrat wird abgeführt, zum Beispiel in eine Faulanlage und das Filtrat wird über die Hohlwelle abgeführt. Ein Teil der über die Pumpe herangeführten Suspension/Flüssigkeit wird nicht in der Filtervorrichtung, sondern vielmehr direkt einer vorzugsweise im Reaktorboden angeordneten Düse zugeführt, die gegebenenfalls zusammen mit Luft die Suspension wieder in den Reaktor zurückführt. Auf diese Weise lässt sich kontrolliert eine bestimmte Zelldichte im Reaktor einstellen.

Weitere vorteilhafte Ausgestaltungen ergeben sich aus den Unteransprüchen.

Die Erfindung wird anhand eines Ausführungsbeispiels und der dazugehörigen Figuren beschrieben.

Die Figuren zeigen:
Figur 1 zeigt schematisch ein erfindungsgemäß eingesetztes Membranmodul mit rotierenden Filterscheiben.
Die Figuren 2 bis 3 zeigen verschiedene Ausführungsformen der erfindungsgemäßen Wasseraufbereitungsvorrichtung.

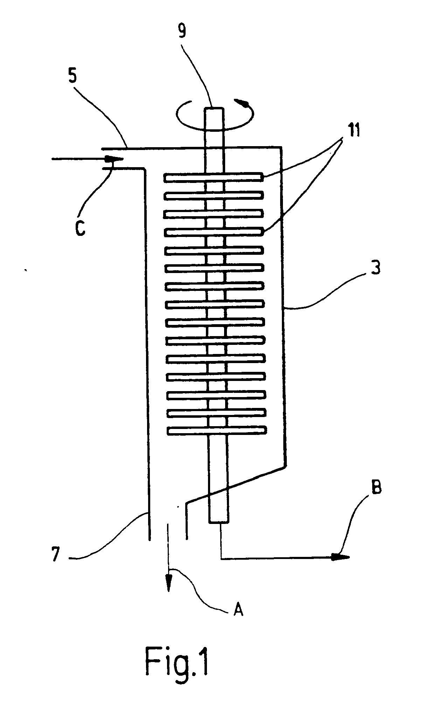

Die Figur 1 zeigt eine als Membranmodul ausgeführte Filtervorrichtung 1 mit einem zylindrischen Gehäuse 3, das eine gegenüber dem Gehäuse tangential angeordnete Zuflussöffnung 5 für die zu filtrierende Feststoffe enthaltende Flüssigkeit beziehungsweise Suspension (C) und eine Austragsöffnung 7 für die abgetrennten Feststoffe, also das Konzentrat (A) aufweist. In dem Gehäuse 3 ist eine Hohlwelle 9 drehbar gelagert, die eine Vielzahl von drehfest mit ihr verbundenen Filterscheiben 11 trägt. Das Filtrat (B) wird aus der Hohlwelle 9 ausgetragen.

Die rohrförmige Hohlwelle 9 ist einstückig ausgebildet und durchsetzt die jeweils eine, nicht dargestellte, zentrale Durchgangsöffnungen aufweisenden Filterscheiben 11.

Die Funktionsweise der Filtervorrichtung 1 stellt sich wie folgt dar:

Das erfindungsgemäß zusammen mit einem -hier nicht dargestellten- aerob arbeitenden Reaktor eingesetzte Membranmodul 1 wird beispielsweise in den Flüssigkeitskreislauf vor die, nicht dargestellte, Düse in den bodennahen Bereich an einen Belebungsreaktor angebaut, so dass der Förderstrom der Pumpe durch die Zuflussöffnung 5 in das Gehäuse 3 eintreten kann. Das durch die Auslassöffnung 7 der Düse zugeführte Konzentrat, wird in der Düse auf eine hohe Geschwindigkeit beschleunigt, wodurch ein Flüssigkeitsstrahl im Reaktor zur Gasdispergierung entsteht. Der entstehende hydrodynamische Druck wird zusammen mit dem auf dem Membranmodul lastenden aus der Füllung des Reaktors resultierenden hydrostatischen Druck zur Erzeugung eines transmembranen Druckgefälles genutzt und führt zur Filtration der eingespeisten Flüssigkeit. Die für die Verhinderung des Deckschichtaufbaus notwendige Überströmungsgeschwindigkeit wird durch ein Rotieren des Tragkörpers und damit der Filterelemente bewirkt. Dieser Vorgang ist also unabhängig vom Flüssigkeitskreislauf in der Wasseraufbereitungsanlage und daher energetisch davon abgekoppelt. Filtrat dringt durch die Filterscheiben 11 in deren Inneres ein, strömt durch die Fluidverbindung zwischen Filterscheibe 11 und Hohlkörper 9 in das Innere der Hohlwelle 9 und wird durch diese abgezogen. Die Feststoffe verlassen das Gehäuse 3 durch die Austragsöffnung 7. Während des Verfahrens rotieren also die Hohlwelle 9 und die damit drehfest verbundenen Filterscheiben 11, so dass eine Überströmgeschwindigkeit erzeugt wird, die zur Reduktion beziehungsweise Vermeidung der Deckschichtbildung auf den Filterscheiben 11 führt. Die Überströmgeschwindigkeit wird erfindungsgemäß also durch die Rotation der Hohlwelle erzeugt und ist damit von der Zuflussgeschwindigkeit und dem Zuflussvolumen der zu filtrierenden Suspension abgekoppelt. Die Überströmgeschwindigkeit ist demgemäß frei wählbar. Diese Verfahrensweise ermöglicht eine energetisch erheblich verbesserte Betriebsweise von zum Beispiel Trinkwasseraufbereitungsanlagen oder Abwasserreinigungsanlagen.

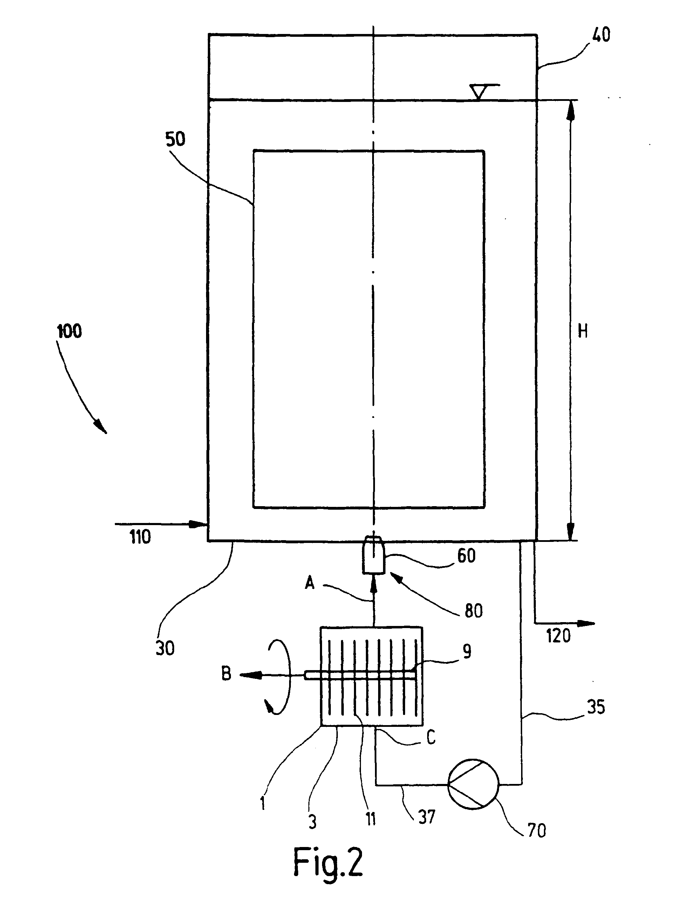

Die Figur 2 zeigt schematisch eine erfindungsgemäße Vorrichtung 100 zur Aufbereitung von Wasser umfassend einen aerob arbeitenden Reaktor 40 und eine. Filtervorrichtung 1. Der Reaktor 40 ist ein Abwasserreaktor und als Schlaufenreaktor mit einem inneren Strömungsleitrohr 50 ausgeführt. Um das Strömungsleitrohr 50 wird der Inhalt des Reaktors umgewälzt, wodurch sich eine intensive Durchmischung ergibt. Dargestellt ist auch der Zulauf 110 und der Ablauf 120 des Reaktors ebenso der Boden 30 des Reaktors 40. Der Reaktor weist eine Füllhöhe H auf, wobei eine möglichst hohe Füllhöhe bevorzugt ist.

Der Antrieb der im Reaktor 40 vorliegenden Umlaufströmung erfolgt durch einen am Reaktorboden 30 eingestrahlten Flüssigkeits-Luftstrahl. Hierzu wird von einer Pumpe 70, die außerhalb des Reaktors 40 angeordnet ist, am Boden 30 Abwasser abgesaugt und, über die Leitungen 35 und 37 einer im Reaktorboden 30 angeordneten Düse 60 zugeführt, in der das Abwasser mit hoher Geschwindigkeit in den Reaktor 40 eingedüst wird, wodurch zusammen mit der eingesaugten Luft 80 eine intensive Gasdispergierung erreicht wird. Zwischen Pumpe 70 und Düse 60 befindet sich das unterhalb des Reaktors 40 angeordnete Membranmodul 1. Das Membranmodul 1 steht unter dem hydrostatischen Druck der Flüssigkeitssäule des Abwasserreaktors 40 und unter dem hydrodynamischen Druck, der von der Pumpe 70 mit Hilfe der Düse 60 erzeugt wird. Beide Drücke erzeugen ein transmembranes Druckgefälle, welches in kostengünstiger Weise die Filtrierung des Abwassers ermöglicht. Der Filtratstrom B wird aus der Hohlwelle 9 abgeleitet, während der Konzentratstrom A zur Düse 60 geleitet wird und zusammen mit Luft 80 in den Reaktor 40 eingedüst wird.

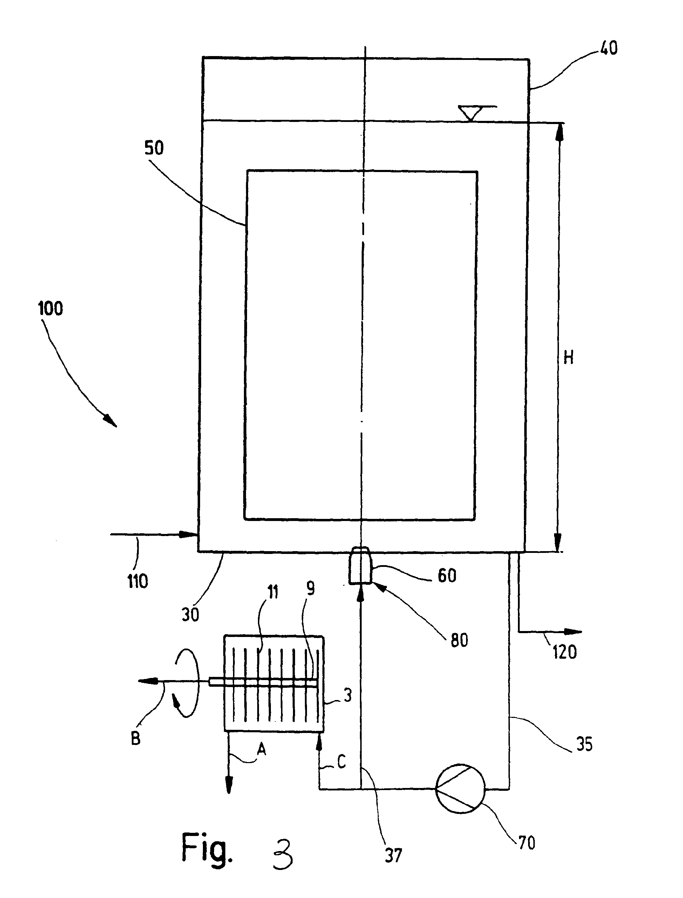

Die Vorrichtung gemäß Figur 3 zeigt im Wesentlichen den gleichen Abwasserreaktor 40 wie in Figur 2. Die Filtervorrichtung 1 ist auf der Druckseite der Pumpe 70 angeordnet. Im Unterschied zu der Vorrichtung nach Figur 2 wird der Konzentratstrom A jedoch nicht zur Düse 60 geleitet, sondern wird dem Membranmodul 1 entzogen und kann direkt beispielsweise zur Schlammfaulung geleitet werden. Gemäß dieser Ausgestaltung der erfindungsgemäßen Vorrichtung kann die Biomassekonzentration im Abwasserreaktor 40 nach Belieben eingestellt werden.

### Beispiel:

Am folgenden Beispiel soll unter Bezugnahme auf die Figuren 1 bis 3 der Kostenvorteil der erfindungsgemäßen Apparatur im Vergleich zu einer herkömmlichen Cross-flow-Filtration aufgezeigt werden.

Für den biologischen Abbau eines industriellen Abwassers wird eine moderne Abwasserreinigungsanlage 100 mit einer biologischen Stufe bestehend aus einem mit aeroben Mikroorganismen besetzten Schlaufenreaktor 40 mit Filtrationseinheit 1 betrieben. Das Abwasser besitzt einen chemischen Sauerstoffbedarf (CSB) von etwa 7900 mg/l und fällt mit etwa 20000 m³ pro Jahr an. Es ist biologisch gut abbaubar mit einem Abbaugrad von 90 % bei einer hydraulischen Verweilzeit von etwa 20 h. Der Schlaufenreaktor 40 besitzt einen Durchmesser von 2 m und eine Füllhöhe H von 15 m, somit beträgt sein Flüssigkeitsvolumen bei einem Gasgehalt von etwa 5 % ungefähr 45 m³ Zur Sauerstoffversorgung der aeroben Mikroorganismen muss dem Schlaufenreaktor 40 unten, also im Bereich des Bodens 30, Luft zugeführt werden mit einem Volumenstrom von etwa 170 bis 200 m³ pro Stunde. Zur Dispergierung des Gases in kleine Blasen und damit zur Schaffung einer genügend gro-ßen Stoffaustauschfläche für die Sauerstoffversorgung wird der zugeführte Luftstrom mittels eines durch eine im Boden 30 des Reaktors angeordnete Düse 60 erzeugten Flüssigkeitsstrahls zerteilt. Hierzu wird dem Schlaufenreaktor 40 am Boden 30 ein Flüssigkeitsstrom von etwa 35 m³/h abgezogen und durch die Leitungen 35 und 37 mit Hilfe einer Pumpe 70 der Düse 60 zur Gasdispergierung zugeführt. Der dabei entstehende hydrodynamische Druck beträgt etwa 2 bar, der statische Druck aufgrund der Flüssigkeitssäule beträgt hingegen knapp 1,5 bar. Selbstverständlich kann eine Gasdispergierung auch ohne Düse erfolgen, zum Beispiel mittels statischer Begaser, wie Lochböden, perforierten Schläuchen, Platten etc.. Der für den Flüssigkeitsstrahl benötigte Leistungseintrag ergibt sich ohne Berücksichtigung des Pumpenwirkungsgrades zu etwa 2 kW, woraus ein spezifischer hydraulischer Leistungseintrag von unter 50 W/m³ resultiert. Zur Erhöhung der aktiven Biomasse im System ist der Schlaufenreaktor 40 auf der Druckseite der Pumpe 70 mit einem Filtrationsmodul 1 ausgerüstet (Figur 2). Es handelt sich um einen Rotations-Scheibenfilter. Dieser besteht aus 10 einzelnen Modulen mit etwa 1 m Länge und jeweils 100 keramischen Filterscheiben 11 mit etwa 0,15 m Durchmesser und einem mittleren Porendurchmesser von etwa 0,1 µm. Die Module werden mittels eines nicht dargestellten Elektromotors mit etwa 220 Umdrehungen pro Minute angetrieben, so dass sich ein spezifischer Filtratfluss von 70 l/m²h ergibt, ohne dass nennenswerte Deckschichtbildung auftritt. Der spezifische Leistungsbedarf dieser Filtration liegt bei etwa 0,13 kWh/m³ ohne Berücksichtigung des Motorwirkungsgrades.

Verwendet man anstatt des beschriebenen Rotations-Scheibenfilters eine herkömmliche Cross-flow-Filtration, so ergäben sich folgende Daten:

Verwendete Membran: keramisches Multikanalelement mit 7 Kanälen mit jeweils 6 mm Durchmesser; mittlerer Porendurchmesser 0,1 µm. Länge des Moduls 1 m.

Bei einer Überströmgeschwindigkeit von 3 m/s kann die Deckschichtbildung akzeptabel kontrolliert werden und es ergibt sich ein mittlerer spezifischer Filtratfluss von etwa 70 l/m²h und somit in diesem Punkt vergleichbare Werte zur erfindungsgemäßen Vorrichtung. Um die benötigte Filtrationsfläche von etwa 32 m² zu erzielen, müssen etwa 240 solcher Cross-flow-Filterröhren verwendet werden, die jeweils zu 10 Einzelröhren in ein gemeinsames Modul eingebaut sind, von denen dann insgesamt 24 Module benötigt werden. Der spezifische Leistungsbedarf dieser Cross-flow-Filtration liegt bei etwa 1,2 kWh pro m³ Filtrat und ist damit nahezu zehnmal größer als bei der erfindungsgemäßen Kombination aus Abwasserreaktor mit Rotations-Scheibenfilter. Zusätzlich besteht bei der Cross-flow-Filtration noch der Nachteil des benötigten sehr großen Volumenstroms (Pumpenauswahl) sowie die Neigung zum Verstopfen, falls Partikel im zu reinigenden Abwasser vorhanden sind, welche einen größeren Durchmesser als den Kanaldurchmesser (in diesem Fall 6 mm) aufweisen.

## Patentansprüche

1. Vorrichtung zur Aufbereitung von Wasser, umfassend einen Reaktor (40) und eine Filtervorrichtung (1),
wobei der Reaktor (40) eine Auslassleitung (35) für den Austritt von Suspension aufweist,
die Filtervorrichtung (1) außerhalb des Reaktors (40) angeordnet ist, ein Gehäuse (3) und mindestens ein mit einem hohlen, drehbar in dem Gehäuse (3) gelagerten Tragkörper (9) drehfest verbundenes Filterelement (11) aufweist, das Innere des Filterelements (11) mit dem Innenraum des Tragkörpers (9) so in Fluidverbindung miteinander steht, dass Filtrat aus dem Inneren des Filterelements (11) in das Innere des Tragkörpers (9) gelangen und von dort abgezogen und abgetrenntes Konzentrat abgeführt werden kann, und
die Filtervorrichtung (1) mit dem Reaktor (40) so in Verbindung steht, dass Suspension aus dem Reaktor (40) in die Filtervorrichtung (1) eintreten kann, **dadurch gekennzeichnet, dass**
die Filtervorrichtung (1) unterhalb des Bodens (30) des Reaktors (40) auf der Druckseite einer zwischen Reaktor (40) und Filtervorrichtung (1) angeordneten Pumpe (70) angeordnet ist und eine Düse (60) im Boden (30) des Reaktors (40), angeordnet ist wodurch das abgetrennte Konzentrat oder Suspension über die Düse (60) in den Reaktor zurückgeführt werden kann.

2. Vorrichtung, nach einem der vorhergehenden Ansprüche, wobei die Düse (60) eine Zweistoffdüse ist.

3. Vorrichtung nach einem der vorhergehenden Ansprüche, **dadurch gekennzeichnet, dass** das Filterelement (11) eine Filterscheibe ist.

4. Vorrichtung nach einem der vorhergehenden Ansprüche, **dadurch gekennzeichnet, dass** der Tragkörper (9) eine Hohlwelle ist.

5. Vorrichtung nach einem der vorhergehenden Ansprüche, **dadurch gekennzeichnet, dass** die Hohlwelle (9) einstückig ausgebildet ist und im Verbindungsbereich zu der mindestens einen Filterscheibe (11) mindestens eine den Durchtritt des Filtrats in die Hohlwelle (9) ermöglichende Öffnung aufweist.

6. Vorrichtung nach einem der vorhergehenden Ansprüche, **dadurch gekennzeichnet, dass** die Hohlwelle (9) mehrstückig ausgebildet ist und die mindestens eine Filterscheibe (11) intermittierend und flüssigkeitsdicht zwischen den einzelnen Abschnitten der Hohlwelle (9) angeordnet ist.

7. Vorrichtung nach einem der vorhergehenden Ansprüche, **dadurch gekennzeichnet, dass** die Vorrichtung (1) in Modulbauweise ausgebildet ist.

8. Vorrichtung nach einem der vorhergehenden Ansprüche, **dadurch gekennzeichnet, dass** in dem Gehäuse (3) Einbauten zur Beeinflussung der Strömung vorgesehen sind.

9. Vorrichtung nach einem der vorhergehenden Ansprüche, wobei der Reaktor (40) ein Schlaufenreaktor ist.

10. Vorrichtung nach einem der vorhergehenden Ansprüche, wobei der Reaktor (40) ein inneres Strömungsleitrohr (50) aufweist.

11. Vorrichtung nach Anspruch 9 oder 10, wobei der Reaktor eine zweite Auslassleitung (120) für den Austritt von Suspension aufweist.

12. Vorrichtung nach einem der Ansprüche 1 bis 11, wobei das Wasser Zulaufwasser zu einer Kläranlage und der Reaktor das dieses Wasser enthaltene Zulaufbecken ist.

13. Vorrichtung nach einem der Ansprüche 1 bis 11, wobei das Wasser Brauchwasser oder Oberflächenwasser und der Reaktor ein Speicherbecken ist.

14. Vorrichtung nach einem der Ansprüche 1 bis 11, wobei das Wasser Abwasser und der Reaktor ein Abwasserreaktor ist.

15. Verfahren zur Aufbereitung von Wasser in einer Vorrichtung nach einem der Ansprüche 1 bis 14, umfassend die Schritte:
Zuführen von aufzubereitendem Wasser in den Reaktor,
Versetzen des Tragkörpers in Rotation zur Erzeugung einer Zentrifugalkraft auf der Oberfläche des Filterelements,
Leiten von Suspension aus dem Reaktor in die Filtervorrichtung, wobei Filtrat von Konzentrat getrennt wird,
Zurückführen des abgetrennten Konzentrats aus der Filtervorrichtung und in den Reaktor und
Abführen des Filtrats, das aus dem Inneren des hohlen Tragkörpers der Filtervorrichtung austritt,
wobei die Filtervorrichtung unterhalb des Bodens des Reaktors angeordnet ist und Konzentrat oder Suspension über eine Düse in den Reaktor zurückgeführt wird.

16. Verfahren nach Anspruch, wobei das Wasser Zulaufwasser für eine Kläranlage ist und einer Vorrichtung zugeführt wird, in der der Reaktor als Zulaufbecken ausgeführt ist und das austretende Filtrat einem dem Zulaufbecken nachgeschalteten Belebungsreaktor zugeführt wird.

17. Verfahren nach Anspruch 15 oder 16, wobei die Düse dem Reaktor das Konzentrat zusammen mit Luft zuführt.

## Claims

1. Device for the treatment of water comprising a reactor (40) and a filter device (1), wherein
the rector (40) has a discharge conduit (35) for the discharge of suspension,
the filter device (1) is arranged outside the reactor (40), a housing (3) and at least one filter element (11), which is connected in a rotationally fixed manner to a hollow support body (9) rotatably disposed in the housing (3), the interior of the filter element (11) has a fluid connection to the interior of the support body (9) so that filtrate can pass from the interior of the filter element (11) into the interior of the support body (9) and from there can be drawn off and
separated concentrate can be removed, and
the filter device (1) connects to the reactor (40) so that suspension from the reactor (40) can enter the filter device (1), **characterised in that**
the filter device (1) is arranged below the floor (30) of the reactor (40) on the pressure side of a pump (70) arranged between the reactor (40) and the filter device (1), and a nozzle (60) is arranged in the floor (30) of the reactor (40), through which the separated concentrate or suspension can be returned to the reactor via the nozzle (60).

2. Device according to one of the preceding claims, wherein the nozzle (60) is a two-fluid nozzle.

3. Device according to one of the preceding claims, **characterised in that** the filter element (11) is a filter disc.

4. Device according to one of the preceding claims, **characterised in that** the support body (9) is a hollow shaft.

5. Device according to one of the preceding claims, **characterised in that** the hollow shaft (9) is configured in one piece and has at least one opening permitting the passage of the filtrate into the hollow shaft (9) in the connection area to the at least one filter disc (11).

6. Device according to one of the preceding claims, **characterised in that** the hollow shaft (9) is configured in multiple pieces and the at least one filter disc (11) is arranged intermittently and in a liquid-tight manner between the individual sections of the hollow shaft (9).

7. Device according to one of the preceding claims, **characterised in that** the device (1) is configured in modular design.

8. Device according to one of the preceding claims, **characterised in that** built-in units are provided in the housing (3) to influence the flow.

9. Device according to one of the preceding claims, wherein the reactor (40) is a loop reactor.

10. Device according to one of the preceding claims, wherein the reactor (40) has an inside flow conduit (50).

11. Device according to Claim 9 or 10, wherein the reactor has a second discharge conduit (120) for the discharge of suspension.

12. Device according to one of Claims 1 to 11, wherein the water is feed water to a waste water treatment plant and the reactor is the feed tank containing this water.

13. Device according to one of Claims 1 to 11, wherein the water is industrial water or surface water and the reactor is a storage tank.

14. Device according to one of Claims 1 to 11, wherein the water is waste water and the reactor is a waste water reactor.

15. Method for the treatment of water in a device according to one of Claims 1 to 14, comprising the steps:
supplying water to be treated into the reactor;
setting the support body in rotation to generate a centrifugal force on the surface of the filter element;
directing suspension out of the reactor into the filter device, wherein the filtrate is separated from concentrate;
returning the separated concentrate from the filter device and into the reactor, and
removing the filtrate, which discharges from the interior of the hollow support body of the filter device,
wherein the filter device is arranged below the floor of the reactor and concentrate or suspension is returned to the reactor via a nozzle.

16. Method according to Claim 15, wherein the water is feed water for a waste water treatment plant and is fed to a device, in which the reactor is configured as a feed tank and the discharging filtrate is fed to an aeration reactor connected downstream of the feed tank.

17. Method according to Claim 15 or 16, wherein the nozzle feeds the concentrate together with air to the reactor.

## Revendications

1. Dispositif de traitement des eaux, comprenant un réacteur (40) et un dispositif de filtration (1), dans lequel
le réacteur (40) présente une conduite de sortie (35) pour la suspension, le dispositif de filtration (1) est à l'extérieur du réacteur (40), et présente un boîtier (3) et au moins un élément filtrant (11), solidaire en rotation avec un support creux (9) pouvant tourner dans le boîtier (3), l'intérieur de l'élément filtrant (11) étant en liaison fluidique avec l'intérieur du support (9) pour que le filtrat puisse quitter l'intérieur de l'élément filtrant (11), arriver à l'intérieur du support (9) et de là être soutiré, et que le concentrat séparé puisse être évacué, et
le dispositif de filtration (1) est en liaison avec le réacteur (40) de manière à ce que la suspension puisse quitter le réacteur (40) et pénétrer dans le dispositif de filtration (1),
**caractérisé en ce que**
le dispositif de filtration (1) est sous le fond (30) du réacteur (40) sur le côté refoulement d'une pompe (70) installée entre le réacteur (40) et le dispositif de filtration (1), et une buse (60) disposée sur le fond (30) du réacteur (40), recycle le concentrat ou la suspension séparé(e) dans le réacteur.

2. Dispositif selon l'une quelconque des revendications précédentes,
**caractérisé en ce que**
la buse (60) est une buse à deux fluides.

3. Dispositif selon l'une quelconque des revendications précédentes,
**caractérisé en ce que**
l'élément filtrant (11) est un disque filtrant.

4. Dispositif selon l'une quelconque des revendications précédentes,
**caractérisé en ce que**
le support (9) est un arbre creux.

5. Dispositif selon l'une quelconque des revendications précédentes,
**caractérisé en ce que**
l'arbre creux (9) est constitué d'une seule pièce et présente, au niveau de la liaison avec l'au moins un disque filtrant (11) au moins une ouverture permettant le passage du filtrat dans l'arbre creux (9).

6. Dispositif selon l'une quelconque des revendications précédentes,
**caractérisé en ce que**
l'arbre creux (9) est en plusieurs pièces et au moins un disque filtrant (11) est disposé de manière intermittente et étanche aux liquides entre les différents tronçons de l'arbre creux (9).

7. Dispositif selon l'une quelconque des revendications précédentes,
**caractérisé en ce que**
le dispositif (1) est conçu de manière modulaire.

8. Dispositif selon l'une quelconque des revendications précédentes,
**caractérisé en ce que**
dans le boîtier (3) des inserts influencent l'écoulement.

9. Dispositif selon l'une quelconque des revendications précédentes,
**caractérisé en ce que**
le réacteur (40) est un réacteur à écoulement en boucle.

10. Dispositif selon l'une quelconque des revendications précédentes,
**caractérisé en ce que**
le réacteur (40) présente un guide tubulaire d'écoulement interne (50).

11. Dispositif selon la revendication 9 ou la revendication 10,
**caractérisé en ce que**
le réacteur présente une deuxième conduite de sortie (120) pour la suspension.

12. Dispositif selon l'une quelconque des revendications 1 à 11,
**caractérisé en ce que**
l'eau est de l'eau d'alimentation vers une station d'épuration et le réacteur est le bassin d'alimentation contenant cette eau.

13. Dispositif selon l'une quelconque des revendications 1 à 11,
**caractérisé en ce que**
l'eau est de l'eau non potable ou de l'eau de surface et le réacteur est un bassin de rétention.

14. Dispositif selon l'une quelconque des revendications 1 à 11,
**caractérisé en ce que**
l'eau est de l'eau usée et le réacteur et un réacteur d'eau usée.

15. Procédé de retraitement d'eaux dans un dispositif selon l'une quelconque des revendications 1 à 14, comportant les étapes suivantes :
- acheminement de l'eau à traiter dans le réacteur,
- mise en rotation du support pour produire une force centrifuge à la surface de l'élément filtrant,
- conduite de la suspension hors du réacteur vers le dispositif de filtration, le filtrat étaut séparé du concentrat,
- reflux du concentrat séparé hors du dispositif de filtration et vers le réacteur, et
- évacuation du filtrat qui sort de l'intérieur du support creux du dispositif de filtration,
le dispositif de filtration étant disposé sous le fond du réacteur et le concentrat ou la suspension étant recylcé(e) dans le réacteur par l'intermédiaire d'une buse.

16. Procédé selon la revendication 16,
**caractérisé en ce que**
l'eau est de l'eau d'alimentation pour une station d'épuration, acheminée vers un dispositif dans lequel le réacteur est un bassin d'alimentation, et le filtrat sortant est acheminé vers un réacteur d'activation en aval du bassin d'alimentation.

17. Procédé selon la revendication 15 ou 16,
**caractérisé en ce que**
la buse achemine le concentrat avec de l'air vers le réacteur.
